# EUROPEAN PATENT APPLICATION

(11) **EP 4 815 041 A1**
(43) Date of publication of application: **30.09.2026**
(21) Application number: 26163567.6
(22) Date of filing: 10.03.2026
(51) Int. Cl.: H01M 4/04, H01M 4/62, H01M 4/66

(54) **ELECTRICAL ENERGY STORAGE DEVICE AND METHOD OF MANUFACTURING THE SAME**

(30) Priority: 26.03.2025 JP 2025052513
(71) Applicant: Prime Planet Energy & Solutions, Inc., Chuo-ku, Tokyo 103-0022 (JP)
(72) Inventor: TAKESHITA, Shuhei, Chuo-ku, Tokyo 103-0022 (JP)
(74) Representative: Kuhnen & Wacker Patent- und Rechtsanwaltsbüro PartG mbB

(57) **Abstract**

A battery according to one embodiment of the electrical energy storage device disclosed herein comprises a negative electrode 60 including a negative electrode current collector 62, a protective region 70, and a negative electrode active material layer 64. The negative electrode current collector 62 includes copper. The protective region 70 is disclosed on the negative electrode current collector 62, and comprises a resin containing nitrile groups and/or hydroxyl groups. The negative electrode active material layer 64 is disposed on the protective region 70.

## Description

### BACKGROUND

The present disclosure relates to an electrical energy storage device and a method of manufacturing the electrical energy storage device.

Japanese Unexamined Patent Application Publication No. 2006-331707 discloses a method of recycling a battery comprising an electrode having an electrode substrate and an active material layer, the active material layer including an active material and a binder resin and being bonded to the electrode substrate. It describes that the active material layer includes a water-based binder resin as the binder resin. It also describes that the method of recycling a battery comprises an active material separation step of heating the active material layer separated from the electrode substrate along with an acidic aqueous solution to hydrolyze the water-based binder resin, thereby separating the active material from the water-based binder resin.

### SUMMARY

When recycling a negative electrode material, the amount of impurities contained in the negative electrode material is an important issue. When the amount of impurities contained in the recovered negative electrode material is large, a purification step may be required for recycling. The presence of the additional purification step is undesirable in view of cost and environmental impacts. Therefore, there is a demand for further development of technologies capable of recovering easily recyclable negative electrode materials.

The electrical energy storage device disclosed herein comprises a negative electrode including a negative electrode current collector, a protective region, and a negative electrode active material layer. The negative electrode current collector includes copper. The protective region is disposed on the negative electrode current collector, and includes a resin having nitrile groups and/or hydroxyl groups. The negative electrode active material layer is disposed on the protective region. This configuration of the electrical energy storage device enables the recovery of an easily recyclable negative electrode material from the negative electrode.

The method of manufacturing an electrical energy storage device disclosed herein comprises a preparation step and a charging step. In the preparation step, an electrical energy storage device assembly is prepared. The electrical energy storage device assembly comprises a negative electrode including a negative electrode current collector, a protective region, and a negative electrode active material layer. The negative electrode current collector includes copper. The protective region is disposed on the negative electrode current collector, and includes a resin having nitrile groups and/or hydroxyl groups. The negative electrode active material layer is disposed on the protective region. In the charging step, the electrical energy storage device assembly is charged. For example, the electrical energy storage device as described above can be manufactured by using this manufacturing method.

### BRIEF DESCRIPTION OF THE DRAWINGS

FIG. 1 shows a schematic cross-sectional view of the configuration of a battery according to one embodiment;
FIG. 2 shows a schematic perspective view of the configuration of an electrode body according to one embodiment;
FIG. 3 shows a schematic view of the configuration of a negative electrode according to one embodiment;
FIG. 4 shows an enlarged schematic view of the configuration within the dashed box in FIG. 3; and
FIG. 5 shows a flowchart of a method of manufacturing a battery according to one embodiment.

### DETAILED DESCRIPTION

Hereinafter, some embodiments of the technology disclosed herein will be described with reference to the drawings. In the figures, components and regions having the same functions are appropriately assigned the same reference numerals. The dimensional relationships (length, width, thickness, and the like) shown in the figures do not reflect actual dimensional relationships. It is noted that matters which are not specifically mentioned in the present specification, but are necessary for implementing the technology disclosed herein may be considered as design matters within the level of those skilled in the art based on conventional technologies. The technology disclosed herein can be implemented based on the contents disclosed in the present specification and the common technical knowledge in the art. The following descriptions are not intended to limit the scope of the present disclosure to the following forms.

In the present specification, the phrase "A to B" indicating a range shall mean "A or more and B or less," and shall also encompass the meaning of "exceeding A" and "less than B." In the present specification, the term "electrical energy storage device" refers to a device capable of charging and discharging. Electrical energy storage devices include batteries such as primary batteries and secondary batteries (e.g., non-aqueous electrolyte secondary batteries such as lithium-ion secondary batteries; nickel metal hydride batteries) and capacitors (physical batteries) such as electric double layer capacitors. Furthermore, the "electrical energy storage device assembly" refers to a structure in which all the constituent materials of the electrical energy storage device are mechanically assembled appropriately, and denotes a structure in a state before undergoing electrochemical activation treatments such as an initial charging treatment. Hereinafter, a lithium-ion secondary battery (hereinafter referred to simply as a "battery") according one embodiment of the electrical energy storage device disclosed herein will be described as an example. It is noted that the following descriptions are not intended to limit the electrical energy storage device to lithium-ion secondary batteries.

As used in the following descriptions, the symbols X, Y, and Z in the figures shall represent the shorter side direction, the longer side direction perpendicular to the shorter side direction, and the top-bottom direction of a battery 100, respectively. However, these are merely directions for the sake of explanation, and do not in any way limit the installation modes of the battery 100. In the present specification, the term "rectangular shape" may represent a concept which encompasses not only rectangular shapes but also substantially rectangular shapes with rounded corners.

### <<Configuration of battery 100>>

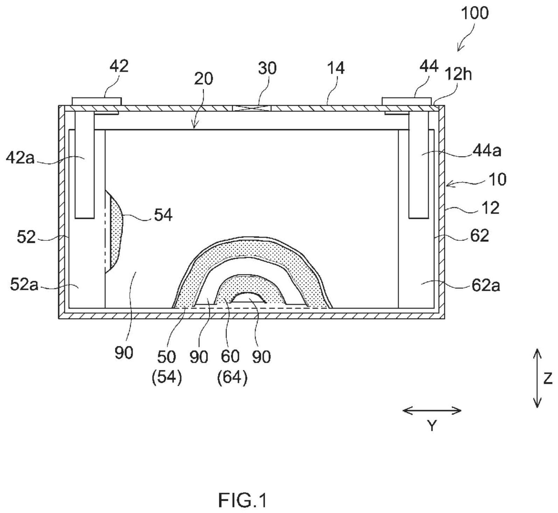

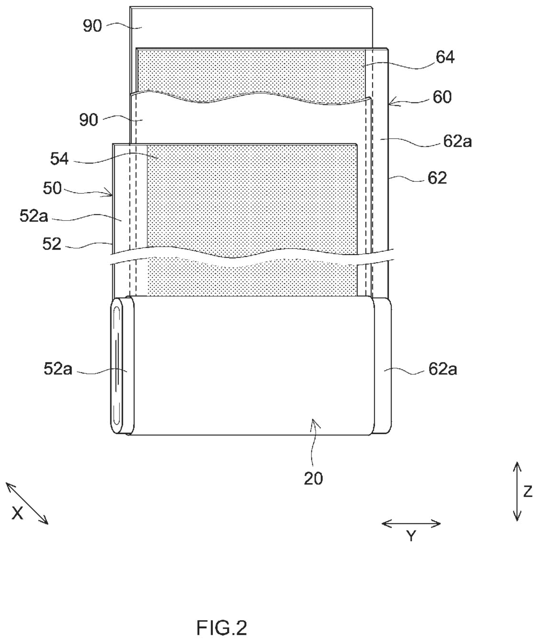

FIG. 1 shows a schematic cross-sectional view of the configuration of a battery 100 according to one embodiment. FIG. 2 shows a schematic perspective view of the configuration of an electrode body 20 according to one embodiment. In the configuration as shown in FIG. 1, the battery 100 comprises a case 10, an electrode body 20, and an electrolyte (not shown). Hereinafter, each of the components will be described.

### <Case 10>

In the configuration as shown in FIG. 1, a case 10 is an outer container of the battery 100. The case 10 houses the electrode body 20 and the electrolyte. Here, the case 10 has a flattened rectangular shape. The case 10 has a case body 12 having an opening 12h and a sealing plate 14 for closing the opening 12h. Here, the sealing plate 14 is a rectangular plate-shaped member (plate). A thin-walled safety valve 30 is provided on the sealing plate 14. The thin-walled safety valve 30 is configured to release the internal pressure of the case 10 when the internal pressure increases at or above a predetermined level. An inlet (not shown) for injecting an electrolyte is provided in the case 10. The case 10 may be made of a lightweight metal material having good thermal conductivity, such as aluminum.

### <Electrode body 20>

In the configuration as shown in FIG. 2, the electrode body 20 is a wound electrode body in which an elongated positive electrode 50 and an elongated negative electrode 60 are laminated via an elongated separator 90, and wound in the longitudinal direction (the Z-direction in FIG. 2). The electrode body 20 has a flattened rectangular shape in this case. Hereinafter, each of the components of the electrode body 20 will be described.

### (Positive electrode 50)

In this embodiment, the positive electrode 50 is of a rectangular sheet as shown in FIG. 2. The positive electrode 50 (positive electrode sheet) has a configuration in which a positive electrode active material layer 54 is formed along the longitudinal direction on one or both surfaces (both surfaces in this case) of an elongated positive electrode current collector 52. A portion 52a where no positive electrode active material layer is formed (i.e., a portion where the positive electrode active material layer 54 is not formed and the positive electrode current collector 52 is exposed) is formed so as to protrude outward from the both sides in the winding axis direction of the wound electrode body 20 (i.e., in the sheet width direction perpendicular to the longitudinal direction). It is noted that the term "sheet-shaped" as used in the present specification may mean that a thickness is, for example, 5 µm to 500 µm.

A conventionally known positive electrode current collector used for this type of battery may be used as the positive electrode current collector 52. The positive electrode current collector 52 is preferably a sheet or a foil made of a metal having good electrical conductivity. Metal materials which may be used for the positive electrode current collector 52 include, for example, aluminum, nickel, titanium, stainless steel, and the like. The positive electrode current collector 52 is preferably an aluminum foil.

There is no particular limitation for the dimensions of the positive electrode current collector 52, and they may be selected appropriately depending on a battery design. The thickness of the positive electrode current collector 52 is, for example, 5 µm to 35 µm, and preferably 7 µm to 20 µm.

In the configuration as shown in FIG. 2, the positive electrode active material layer 54 is formed in a band-shaped manner along the longitudinal direction of the positive electrode current collector 52. The positive electrode active material layer 54 contains a positive electrode active material. A conventionally known positive electrode active materials used for this type of battery may be used as the positive electrode active material. As the positive electrode active material, for example, lithium composite oxides, lithium transition metal phosphate compounds, and the like can be used. There is no particular limitation for the crystal structure of the positive electrode active material, but it may be of a layered structure, a spinel structure, an olivine structure, or the like.

Lithium composite oxides are preferably lithium transition metal composite oxides including at least one of Ni, Co, and Mn as a transition metal element. Lithium composite oxides include, for example, lithium-nickel based composite oxides, lithium-cobalt based composite oxides, lithium-manganese based composite oxides, lithium-nickel-manganese based composite oxides, lithium-nickel-cobalt-manganese based composite oxides, lithium-nickel-cobalt-aluminum based composite oxides, and lithium-iron-nickel-manganese based composite oxides.

It is noted that the term "lithium-nickel-cobalt-manganese based composite oxide" as used in the present specification encompasses not only oxides having Li, Ni, Co, Mn, and O as constituent elements, but also oxides including one or two or more additive elements other than these. Examples of such additive elements include transition metal elements, typical metal elements, and the like, such as Mg, Ca, Al, Ti, V, Cr, Y, Zr, Nb, Mo, Hf, Ta, W, Na, Fe, Zn, and Sn. In addition, the additive elements may be semimetal elements such as B, C, Si, and P, or nonmetal elements such as S, F, Cl, Br, and I. This applies similarly to above-described lithium-nickel based composite oxides, lithium-cobalt based composite oxides, lithium-manganese based composite oxides, lithium-nickel-manganese based composite oxides, lithium-nickel-cobalt-aluminum based composite oxides, lithium-iron-nickel-manganese based composite oxides, and the like.

Examples of lithium transition metal phosphate compounds include, for example, lithium iron phosphate (LiFePO₄), lithium manganese phosphate (LiMnPO₄), lithium manganese iron phosphate, and the like.

These positive electrode active materials may be used alone or in combination of two or more. Lithium-nickel-cobalt-manganese based composite oxides may be in particular preferably used as the positive electrode active material because they have various excellent properties such as initial resistance properties.

There is no particular limitation for the average particle diameter (D50) of the positive electrode active material, but it may be, for example, 0.05 µm to 25 µm, preferably 1 µm to 20 µm, more preferably 3 µm to 15 µm. The term "average particle diameter" as use in the present specification refers to a particle diameter corresponding to the cumulative frequency of 50 vol% from the side of fine particles having smaller particle diameters in the volume-based particle diameter distribution as determined based on the laser diffraction/scattering methods.

The positive electrode active material layer 54 may include a component other than the positive electrode active material, such as trilithium phosphate, an electrically conductive material, a binder, and the like. Electrically conductive materials include, for example, carbon black such as acetylene black (AB), carbon fibers such as vapor grown carbon fibers (VGCFs) and carbon nanotubes (CNTs), and other carbon materials (e.g., graphites). Binders include, for example, poly(vinylidene fluoride) (PVDF), polytetrafluoroethylene (PTFE), styrene butadiene rubber (SBR), and the like.

The content of the positive electrode active material in the positive electrode active material layer 54 (i.e., the content of the positive electrode active material when the total mass of the positive electrode active material layer 54 is set to 100 mass%) is, for example, 70 mass% or more, preferably 80 mass% or more, more preferably 85 mass% or more, and may have an upper limit of 99 mass% or less. There is no particular limitation for the content of trilithium phosphate in the positive electrode active material layer 54, but it is preferably 0.1 mass% to 15 mass%, more preferably 0.2 mass% to 10 mass%. There is no particular limitation for the content of an electrically conductive material in the positive electrode active material layer 54, but it is preferably 0.1 mass% to 20 mass%, more preferably 0.3 mass% to 15 mass%. There is no particular limitation for the content of the binder in the positive electrode active material layer 54, but it is preferably 0.4 mass% to 15 mass%, more preferably 0.5 mass% to 10 mass%.

The weight per unit area of the positive electrode active material layer 54 per surface is, for example, 1 mg/cm² or more, preferably 2 mg/cm² or more, and more preferably 5 mg/cm² or more. The upper limit of the weight per unit area of the positive electrode active material layer 54 per surface is, for example, 20 mg/cm² or less, and may be 15 mg/cm² or less, or 10 mg/cm² or less. It is noted that the term "weight per unit area of the active material layer" as used in the present specification refers to the mass (solid content) of the active material layer per unit area of the current collector.

The thickness of the positive electrode active material layer 54 is, for example, 10 µm or more, preferably 20 µm or more. The upper limit of the thickness per surface of the positive electrode active material layer 54 is, for example, 400 µm or less, preferably 300 µm or less.

In general, the battery 100 is disassembled, for example, at 3 V or lower (e.g., at 0 V) for safety reasons. However, when disassembled at 3 V or below, copper (Cu) contained in a negative electrode current collector 62 may tend to be eluted. This may result in a significant amount of copper impurities remaining in a recovered negative electrode active material (negative electrode material). If the battery 100 is reproduced with materials having remaining copper foreign matters, safety may be compromised due to the presence of the metal foreign matters. Therefore, directly use of the recovered negative electrode material is difficult. Further, if a purification step were performed to remove copper foreign matters, additional cost would be incurred, and use of environmentally unfriendly chemicals would be required. Therefore, the purification step is not preferred. Accordingly, the present inventors developed herein a negative electrode 60 which can allow a negative electrode material to be recovered in an easily recyclable form.

### (Negative electrode 60)

In this embodiment, the negative electrode 60 is of a rectangular sheet as shown in FIG. 2. The negative electrode 60 (negative electrode sheet) has a configuration in which a negative electrode active material layer 64 is formed along the longitudinal direction on one or both surfaces (one surface in this case) of an elongated negative electrode current collector. A portion 62a where no negative electrode active material layer is formed (i.e., a portion where the negative electrode active material layer 64 is not formed, and the negative electrode current collector 62 is exposed) is formed so as to protrude outward from the both sides in the winding axis direction of the wound electrode body 20.

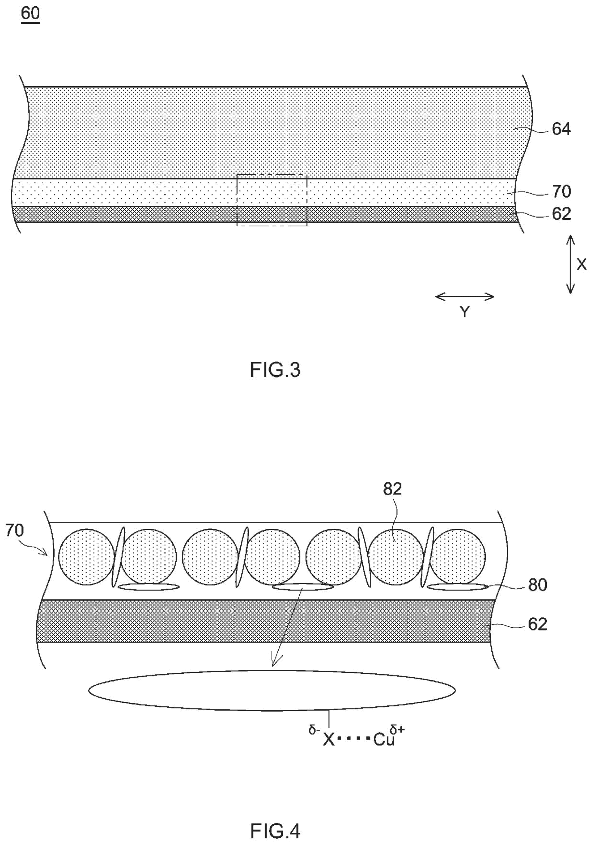

Here, FIG. 3 shows a schematic view of the configuration of a negative electrode 60 according to one embodiment. FIG. 3 shows a cross-sectional view of the rectangular sheet-shaped negative electrode 60 cut along its shorter side. FIG. 4 shows an enlarged schematic view of the configuration within the dashed box in FIG. 3. As shown in FIG. 3, the negative electrode 60 comprises a negative electrode current collector 62, a protective region 70, and a negative electrode active material layer 64. Hereinafter, each of the components will be

### described.

The negative electrode current collector 62 includes copper (Cu). Here, the content of copper in the negative electrode current collector 62 is, for example, 90 mass% or more, preferably 95 mass% or more when the total mass of the negative electrode current collector 62 is set to 100 mass%, or may be 99 mass% or more (e.g., 100 mass%). The negative electrode current collector 62 may include a metal material other than copper. Such metal materials include, for example, nickel, titanium, stainless steel, and the like. The negative electrode current collector 62 is preferably a sheet or a foil. The negative electrode current collector 62 is preferably a copper foil.

There is no particular limitation for the dimensions of the negative electrode current collector 62, and they may be selected appropriately depending on a battery design. The thickness of the negative electrode current collector 62 is, for example, 5 µm to 35 µm, and preferably 6 µm to 20 µm.

As shown in FIG. 3, the protective region 70 is disposed on the negative electrode current collector 62. The protective region 70 is disposed between the negative electrode current collector 62 and the negative electrode active material layer 64. The protective region 70 is a region which is provided separately from the negative electrode active material layer 64. In the negative electrode 60, the negative electrode current collector 62, the protective region 70, and the negative electrode active material layer 64 are laminated in this order.

In the configuration as shown in FIG. 3, the protective region 70 is formed in a band-shaped manner along the longitudinal direction of the negative electrode current collector 62. In the configuration as shown in FIG. 3, the protective region 70 is disposed in a layered manner on the negative electrode current collector 62. That is, the protective region 70 here is disposed in a form of a layer on the negative electrode current collector 62. The thickness of the protective region 70 is, for example, 0.1 µm to 30 µm, preferably 0.1 µm to 10 µm.

It is noted that in other embodiments, the protective region 70 need not be disposed in a form of a layer on the negative electrode current collector 62. The protective region 70 may be formed so as to have a shape such as dots, stripes, waves, bands (streaks), dashed lines, or combinations thereof, in planer view. Nonetheless, in view of effectively suppressing elution of copper from the negative electrode current collector 62, the protective region 70 is preferably disposed in a layered manner.

The formation area of the protective region 70 per surface of the negative electrode current collector 62 is, for example, 50% or more when the area of one surface of the negative electrode current collector 62 is set to 100%. It is preferably 60% or more or 70% or more, more preferably 80% or more or 90% or more, in particular preferably 95% or more or 99% or more (may be 100%) in view of effectively suppressing elution of copper from the negative electrode current collector 62.

The weight per unit area of the protective region 70 per surface of the negative electrode current collector 62 is, for example, 0.1 mg/cm² or more, preferably 0.2 mg/cm² or more, and more preferably 0.5 mg/cm² or more. The upper limit of the weight per unit area of the protective region 70 per surface of the negative electrode current collector 62 may be, for example, 2 mg/cm² or less, 1.5 mg/cm² or less, or 1 mg/cm² or less. It is noted that the term "weight per unit area of the protective region" as used in the present specification refers to the mass (solid content) of the protective region per unit area of the negative electrode current collector.

The protective region 70 includes a resin 80 having nitrile groups (-CN) and/or hydroxyl groups (-OH). The symbol X in FIG. 4 represents a substituent, and the substituent X is a nitrile group or a hydroxyl group. Examples of the resin 80 include acrylonitrile-butadiene rubber (NBR, acrylonitrile-butadiene copolymer), acrylonitrile-styrene-butadiene rubber (ABS, acrylonitrile-butadiene-styrene copolymer), polyacrylonitrile (PAN), polyvinyl alcohol (PVA), polyacrylic acid (PAA), polymethacrylic acid (PMA), poly(acrylonitrile-vinyl acetate) copolymer (poly(acrylonitrile-co-vinylacetate), and the like. Among these, acrylonitrile-butadiene rubber (NBR), acrylonitrile-styrene-butadiene rubber (ABS), and polyvinyl alcohol (PVA) may suitably be used as the resin 80. These types of resin 80 may be used alone or in combinations of two or more. Commercially available products may be use as the resin 80 without any particular limitation. It is noted that the identification of the resin 80 in the protective region 70 can be performed, for example, by gas chromatography-mass spectrometry.

When the resin 80 includes nitrile groups, the content of nitrile in the resin 80 is, for example, 10% or more. It is preferably 20% or more, more preferably 30% or more (e.g., 35% or more) in view of effectively suppressing elution of copper contained in the negative electrode current collector 62. The upper limit of the content of nitrile in the resin 80 is, for example, 60% or less, and may be 50% or less, or 40% or less. The above ranges of the content can also be applied not only when the resin 80 includes hydroxyl groups but also when the resin 80 includes both nitrile groups and hydroxyl groups. The content of nitrile groups (or hydroxyl groups) in the resin 80 can be determined by conventionally known methods. For example, the content of nitrile groups in the resin 80 can be determined by extracting the resin 80 with a solvent, then measuring the amount of polymers using thermogravimetry (TG) and the like, and determining the amount of nitrogen using the Kjeldahl method, and converting that value to the amount of acrylonitrile.

The average degree of polymerization of the resin 80 is, for example, 50 to 30,000, and may be 100 to 20,000. The average degree of polymerization can be determined, for example, by NMR measurements and the like. Further, the weight average molecular weight of the resin 80 may be, for example, 1,000 to 100,000, and may be 5,000 to 10,000. The term "weight average molecular weight" as used in the present specification refers to the weight-based average molecular weight as measured by gel permeation chromatography (GPC) and converted using a standard polystyrene calibration curve.

The content of the resin 80 in the protective region 70 is, for example, 1 mass% or more when the total mass of the protective region 70 is set to 100 mass%. It is preferably 5 mass% or more, more preferably 7 mass% or more in view of effectively suppressing elution of copper contained in the negative electrode current collector 62. The upper limit of the content of resin 80 in the protective region 70 is, for example, 30 mass% or less. It is preferably 20 mass% or less in view of effectively preventing the protective region 70 from becoming a resistive layer. It is more preferably 10 mass% or less.

The protective region 70 may further include an electrically conductive material 82. Examples of the electrically conductive materials 82 include carbon black such as acetylene black (AB), carbon fibers such as vapor-grown carbon fibers (VGCFs) and carbon nanotubes (CNTs), graphene, and other carbon materials (e.g., graphite and the like). Among these, acetylene black is preferably used as the electrically conductive material 82. The content of the electrically conductive material 82 in the protective region 70 is, for example, 70 mass% or more when the total mass of the protective region 70 is set to 100 mass%. It is preferably 80 mass% or more, more preferably 90 mass% or more in view of effectively preventing the protective region 70 from becoming a resistive layer. The upper limit of the content of electrically conductive material 82 in the protective region 70 is, for example, 99 mass% or less. It is preferably 97 mass% or less, more preferably 95 mass% or less in view of effectively suppressing elution of copper contained in the negative electrode current collector 62.

The protective region 70 may further include a water-insoluble binder (not shown). The term "water-insoluble" as used in the present disclosure may mean a binder having a solubility in water at 25°C of less than 1 mass% (preferably less than 0.5 mass% or less than 0.1 mass%). Examples of such binders include poly(vinylidene fluoride) (PVDF), polytetrafluoroethylene (PTFE), styrene butadiene rubber (SBR), and the like. Among these, poly(vinylidene fluoride) is suitably used as the binder. The content of the binder in the protective region 70 is, for example, 1 mass% or more when the total mass of the protective region 70 is set to 100 mass%, and may be 2 mass% or more, or 3 mass% or more. The upper limit of the content of the binder in the protective region 70 is, for example, 10 mass% or less, and may be 5 mass% or less.

In the configuration as shown in FIG. 2, the negative electrode active material layer 64 is formed in a band-shaped manner along the longitudinal direction of the negative electrode current collector 62. The negative electrode active material layer 64 is disposed on the protective region 70. The negative electrode active material layer 64 contains a negative electrode active material. Conventionally known negative electrode active materials used for this type of battery may be used as the negative electrode active material. Negative electrode active materials include, for example, carbon materials such as graphite, hard carbon, soft carbon, and the like. Graphite may be either natural graphite or synthetic graphite, and may be amorphous carbon-coated graphite in which the graphite is coated with an amorphous carbon material.

There is no particular limitation for the average particle diameter (median diameter: D50) of the negative electrode active material, but it is, for example, 0.1 µm to 50 µm, preferably 1 µm to 25 µm, and more preferably 5 µm to 20 µm.

The negative electrode active material layer 64 may contain a component other than the negative electrode active material, examples of which include binders, electrically conductive materials, and the like. Binders include, for example, poly(vinylidene fluoride) (PVDF), poly(vinylidene fluoride) (PVDF), styrene-butadiene rubber (SBR), carboxymethyl cellulose (CMC), polyacrylic acid (PAA), and the like. CMC may also function as a thickening agent. Examples of electrically conductive materials include carbon black such as acetylene black, carbon fibers, carbon nanotubes (CNTs), and the like.

The content of the negative electrode active material in the negative electrode active material layer 64 (i.e., the content of the negative electrode active material when the total mass of the negative electrode active material layer 64 is set to 100 mass%) is preferably 90 mass% or more and more preferably 95 mass% or more, and may have an upper limit of 99 mass% or less. The content of the binder in the negative electrode active material layer is preferably 0.1 mass % to 8 mass %, and more preferably 0.5 mass % to 5 mass %. The content of the electrically conductive material in the negative electrode active material layer 64 is preferably 0.01 mass% to 3 mass%, and more preferably 0.05 mass% to 1 mass%.

The weight per unit area of the negative electrode active material layer 64 per surface is, for example, 1 mg/cm² or more, preferably 2 mg/cm² or more, and more preferably 5 mg/cm² or more. Meanwhile, the upper limit of the weight per unit area of the negative electrode active material layer 64 per surface is, for example, 20 mg/cm² or less, and may be 15 mg/cm² or less, or 10 mg/cm² or less.

The thickness of the negative electrode active material layer 64 is, for example, 10 µm to 400 µm, and preferably 20 µm to 300 µm.

The residual amount of copper in the negative electrode material recovered after the disassembly of the battery 100 is preferably, for example, less than 600 ppm, more preferably 500 ppm or less, more preferably 400 ppm or less, even more preferably 200 ppm or less, and in particular preferably 100 ppm or less (e.g., 80 ppm or less). It is noted that the term "ppm" as used herein may refer to a concentration relative to the whole negative electrode material (the total mass). The same applies to the test examples described below.

### (Separator 90)

In this embodiment, the separator 90 is of a rectangular sheet as shown in FIG. 2. Examples of the separator 90 (separator sheet) include porous sheets (films) composed of resins such as, for example, polyethylene (PE), polypropylene (PP), polyester, cellulose, and polyamide. Such porous sheets may have single-layer structures or multi-layer structures of two or more layers (e.g., a three-layer structure in which PP layers are laminated on the both surfaces of a PE layer). A heat-resistant layer (HRL) may be provided on a surface of the separator 90.

There is no particular limitation for the thickness of the separator 90, but it is, for example, 5 µm to 50 µm, and preferably 10 µm to 30 µm. There is no particular limitation for the air permeability of the separator 90 as determined by the Gurley test method, but it is preferably 350 seconds/100 cc or less.

### <Electrolyte>

The electrolyte is typically a non-aqueous electrolyte containing a non-aqueous solvent and a supporting salt (an electrolyte salt). Organic solvents used for an electrolyte of this type of battery, such as carbonates, ethers, esters, nitriles, sulfones, and lactones, can be used as the non-aqueous solvent without any particular limitation. Among these, carbonates are preferred, specific examples of which include ethylene carbonate (EC), propylene carbonate (PC), diethyl carbonate (DEC), dimethyl carbonate (DMC), ethyl methyl carbonate (EMC), monofluoroethylene carbonate (FEC), difluoroethylene carbonate (DFEC), monofluoromethyl difluoromethyl carbonate (F-DMC), trifluorodimethyl carbonate (TFDMC), and the like. Such non-aqueous solvents may be used alone or in combination of two or more. For example, the non-aqueous solvents consist solely of carbonates. As another example, the non-aqueous solvents contain carbonates and esters such as methyl acetate.

Lithium salts such as LiPF₆, LiBF₄, and lithium bis(fluorosulfonyl)imide (LiFSI) (preferably LiPF₆) can be suitably used as the supporting salt. The concentration of the supporting salt is preferably 0.7 mol/L to 1.3 mol/L.

It is noted that the non-aqueous electrolyte may include components other than the aforementioned components, for example, various additives such as coating-formation agents such as, for example, vinylidene carbonate (VC), oxalato complexes; gas-generating agents such as biphenyl (BP), cyclohexylbenzene (CHB); thickening agents; and the like, provided that such components do not significantly impair the effects of the present disclosure.

In the configuration as shown in FIG. 1, a positive electrode terminal 42 and a negative electrode terminal 44 are disposed at the sealing plate 14. The positive electrode terminal 42 is a terminal for external connection in the positive electrode side. The positive electrode terminal 42 here is electrically connected to the portion 52a where no positive electrode active material layer is formed at the electrode body 20 via a positive electrode current collector plate 42a. The positive electrode terminal 42 is preferably made of a metal, and more preferably consists of aluminum or an aluminum alloy. The positive electrode current collector 42a may consist of an electrically conductive metal, for example, aluminum, an aluminum alloy, nickel, stainless steel, and the like. The negative electrode terminal 44 is a terminal for external connection in the negative electrode side. The negative electrode terminal 44 here is electrically connected to the portion 62a where no negative electrode active material layer is formed at the electrode body 20 via a negative electrode current collector plate 44a. The negative electrode terminal 42 is preferably made of a metal, and more preferably consists of copper or a copper alloy. The negative electrode current collector 44a may consists of an electrically conductive metal, for example, copper, a copper alloy, nickel, stainless steel, and the like.

### <Method of manufacturing battery 100>

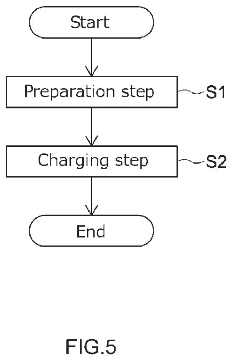

Hereinafter, a method of manufacturing the battery 100 according to this embodiment will be described. Here, FIG. 5 shows a flowchart of a method of manufacturing the battery 100 according to one embodiment. It is noted that the following descriptions of the manufacturing method is not intended to limit the method of manufacturing the battery 100 to the following manufacturing method. The steps described below may be performed in any order as appropriate. In addition to the steps described below, another step may be added as necessary.

As shown in FIG. 5, the method of manufacturing the battery 100 according to this embodiment comprises a preparation step S1 and a charging step S2. Hereinafter, each of the steps will be described.

### (Preparation step S1)

In this step, a battery assembly is prepared which comprises a negative electrode 60 including a negative electrode current collector 62, a protective region 70, and a negative electrode active material layer 64. The negative electrode 60 can be manufactured, for example, by the following method. In this embodiment, a method of manufacturing the negative electrode 60 comprises a preparing step, a first formation step, and a second formation step.

It is noted that the term "slurry" as used in the present specification refers to a mixture in which some or all of solid components are dispersed in a dispersion medium, and encompasses so-called "pastes," "inks," and the like.

First, the negative electrode current collector 62 including copper is prepared (preparing step). Specifically, the negative electrode current collector 62 as described in the section titled "Configuration of battery 100."

Next, the protective region 70 is formed on one or both surfaces (here, one surface) of the negative electrode current collector 62 prepared above (first formation step).

Specifically, a protective region-forming slurry is first prepared. In preparing the protective region-forming slurry, for example, a resin, an electrically conductive material, a binder, and a dispersion medium are mixed using a mixing device. The resin is characterized by having nitrile groups and/or hydroxyl groups. There is no particular limitation for the blending amounts of the materials described above, but for example, the followings may be used: the amount of the resin is 1 mass% to 30 mass% (preferably 5 mass% to 10 mass%); the amount of the electrically conductive material is 70 mass% to 99 mass% (preferably 80 to 95 mass%), and the amounts of the binder is 1 to 10 mass% (preferably 1 mass% to 5 mass%) when the total mass of the resin, the electrically conductive material, and the binder is set to 100 mass%. For the resin, the electrically conductive material, and the binder, those described in the corresponding sections of "Configuration of battery 100." The blending amount of the dispersion medium may be, for example, 10 parts by mass to 40 parts by mass when the total mass of the resin, the electrically conductive material, and the binder is set to 100 parts by mass. For example, N-methyl-2-pyrrolidone (NMP) can be used as the dispersion medium. The solid content percent of the protective region-forming slurry is preferably adjusted to 60% or less in view of workability, and more preferably adjusted to 50% or less. The lower limit of the solid content percent of the protective region-forming slurry is, for example, 30% or more, and may be 40% or more. The solid content percent can be measured using conventionally known methods.

Conventional mixing devices known to be used for this type of application may be used as the mixing device, without any particular limitation. The viscosity of the protective region-forming slurry may be, for example, but not limited to, 10 mPa·s to 500 mPa·s. A value of the viscosity may be measured, for example, at 25°C using a commercially available rotational viscometer.

The protective region-forming slurry prepared as described above is coated on a predetermined region of the negative electrode current collector 62 prepared as described above. Such coating can be performed using gravure coaters, comma coaters, slit coaters, die coaters, spin coaters, spray dryers, and the like. Then, the coating material is dried at a predetermined temperature (e.g., 40°C to 90°C). In this way, the protective region 70 can be formed.

In this embodiment, the protective region 70 is formed in a band-shaped manner along the longitudinal direction of the negative electrode current collector 62. The protective region 70 here is disposed in a layered manner on the negative electrode current collector 62. That is, the protective region 70 here is disposed in a form of a layer on the negative electrode current collector 62.

The thickness of the protective region 70 formed as described above is, for example, 0.1 µm to 30 µm, preferably 0.1 µm to 10 µm.

It is noted that in other embodiments, the protective region 70 need not to be disposed in a form of a layer on the negative electrode current collector 62. The protective region 70 may be formed so as to have a shape such as dots, stripes, waves, bands (streaks), dashed lines, or combinations thereof, in planer view. Nonetheless, in view of effectively suppressing elution of copper from the negative electrode current collector 62, the protective region 70 is preferably disposed in a layered manner. It is noted that the details regarding the formation area and the weight per unit area of the protective region 70 on the negative electrode current collector 62 can be found in the corresponding sections of "Configuration of battery 100."

Subsequently, the negative electrode active material layer 64 is formed on the protective region 70 formed in the first formation step as described above (second formation step).

Specifically, a negative electrode active material layer-forming slurry is produced. In production of the negative electrode active material layer-forming slurry, for example, a negative electrode active material, a binding agent, a thickening agent, and a dispersion medium are mixed using a mixing device. There is no particular limitation for the blending amounts of the components as described above, but for example, the followings may be used: the amount of the negative electrode active material is 90 mass% to 99 mass%; the amount of the binding agent is 0.1 mass% to 0.5 mass%; the amount of the thickening agent is 0.1 mass% to 0.5 mass% when the total mass of the negative electrode active material, the binding agent, and thickening agent is set to 100 mass%. For the negative electrode active material, the binding agent, and the thickening agent, those described in the corresponding sections of "Configuration of battery 100." The blending amount of the dispersion medium may be, for example, 10 parts by mass to 40 parts by mass when the total mass of the negative electrode active material, the binding agent, and the thickening agent is set to 100 parts by mass. For example, N-methyl-2-pyrrolidone (NMP) can be used as the dispersion medium. The solid content percent of the negative electrode active material layer-forming slurry is preferably adjusted to 60% or less in view of workability, and more preferably adjusted to 50% or less. The lower limit of the solid content percent of the negative electrode active material layer-forming slurry is, for example, 30% or more, and may be 40% or more.

Conventional mixing devices known to be used for this type of application may be used as the mixing device without any particular limitation. The viscosity of the negative electrode active material layer-forming slurry may be, for example, but not limited to, 10 mPa·s to 500 mPa·s. A value of the viscosity may be measured, for example, at 25°C using a commercially available rotational viscometer.

The negative electrode active material layer-forming slurry prepared as described above is coated on the protective region 70 formed in the second formation step as described above. Such coating can be performed using gravure coaters, comma coaters, slit coaters, die coaters, spin coaters, spray dryers, and the like. Then, the coating material is dried at a predetermined temperature (e.g., 40°C to 90°C). In this way, the negative electrode active material layer 64 can be formed.

Then, a laminate of the negative electrode current collector 62, the protective region 70, and the negative electrode active material layer 64, produced as described above, is pressed. Such pressing may be performed using a press machine and the like. The pressing pressure of the above press machine may be, for example, but not limited to, 10 MPa to 100 MPa. Conventionally known press machines of this type of application may be used as the press machine without any particular restriction.

In this way, the negative electrode 60 can be produced.

The negative electrode 60 produced as described above and the positive electrode 50 produced by a conventionally known method are laminated via the separator 90 interposed between them, and wound, and then pressed at a predetermined pressure. In this way, the electrode body 20 having a flattened shape can be obtained. Subsequently, a sealing plate 14 having a positive electrode terminal 42 and a negative electrode terminal 44 is prepared. A positive electrode collector plate 42a and a negative electrode collector plate 44a are then attached to the positive electrode terminal 42 and the negative electrode terminal 44, respectively. The portion 56 where no positive electrode active material layer is formed at the electrode body 20 is then electrically connected to the positive electrode current collector plate 42a. The portion 62a where no negative electrode active material layer is formed at the electrode body 20 is then electrically connected to the negative electrode current collector plate 44a. Next, the opening 12h of the case body 12 is sealed by the sealing plate 14, and the periphery of the opening 12h is joined. In this way, the battery assembly can be obtained.

### (Charging step S2)

In this step, the battery assembly prepared in the preparation step S1 as described above is charged. This step is typically the first charging (initial charging) of the battery assembly. The charging step S2 may be performed, for example, by connecting an external power source with the battery assembly between the positive electrode terminal 42 and the negative electrode terminal 44, and performing charging until the voltage between the terminals reaches a predetermined target voltage. The battery assembly is preferably charged until the state of charge (SOC) reaches 1% or more, more preferably 2% or more, and most preferably 5% or more. The charging rate may be, for example, 0.01 C to 1 C (preferably 0.1 C to 0.5 C). The current value may be, for example, 1 V to 5 V (preferably 1 V to 4.5 V). Charging can be performed once, or can be repeated two or more times, for example, with discharging in between. This step may be performed, for example, under ambient conditions (approximately 25°C ± 10°C).

In this way, the battery 100 can be obtained.

As described above, the battery 100 according to this embodiment comprises the negative electrode 60 including the negative electrode current collector 62, the protective region 70, and the negative electrode active material layer 64. The negative electrode current collector 62 includes copper. In such a case, copper tends to be eluted from the negative electrode current collector 62 upon the disassembly of the battery 100. This results in a high residual content of copper impurities in the recovered negative electrode material. This is undesirable. In contrast, the negative electrode active material layer 64 is disposed on the protective region 70 in the battery 100. Further, the protective region 70 includes the resin 80 having nitrile groups and/or hydroxyl groups. In the battery 100, the protective region 70 is provided between the negative electrode current collector 62 and the negative electrode active material layer 64 to prevent copper ions from reaching the negative electrode active material layer 64 even if copper is eluted from the negative electrode current collector 62. According to this configuration, even if copper ions are eluted from the negative electrode current collector 62, copper ions are adsorbed in the resin 80 by electrostatic attraction due to the polarity of the nitrile groups and the hydroxyl groups present in the resin (see FIG. 4). This allows the negative electrode 60 to be removed under conditions where the content of copper reduced in the negative electrode active material layer 64, even when discharged down to 0 V in the process of the disassembling the battery 100. Therefore, easily recyclable negative electrode materials can be recovered. The protective region 70 can also be referred to as a copper ion capture region. The battery 100 of this configuration can be manufactured, for example, by the manufacturing method described above.

In a preferred embodiment, the resin 80 comprises at least one of acrylonitrile-butadiene rubber, acrylonitrile-styrene-butadiene rubber, and polyvinyl alcohol. These resins enable the aforementioned effects to be obtained suitably.

In a preferred embodiment, the protective region 70 further includes an electrically conductive material. When the protective region 70 is provided on the negative electrode current collector 62, the protective region 70 can act as a resistive layer for the negative electrode active material layer 64 / the negative electrode current collector 62. However, such resistance can be effectively reduced by adding an electrically conductive material to the protective region 70. Acetylene black can be preferably used as the electrically conductive material.

In a preferred embodiment, the protective region 70 further comprises a water-insoluble binder. For example, when recovering the negative electrode active material layer 64 from the battery 100 by aqueous stripping, inclusion of a water-insoluble binder can prevent the protective region 70 from being stripped away together. This is preferred because the recovery rate of the negative electrode active material can be improved. Poly(vinylidene fluoride) can be preferably used as such binder.

In a preferred embodiment, the protective region 70 is disposed in a layered manner on the negative electrode current collector 62. This configuration enables the aforementioned effects to be obtained effectively.

In a preferred embodiment, the protective region 70 is disposed entirely on a predetermined region of the negative electrode current collector 62. This configuration enables the aforementioned effects to be obtained effectively.

The battery 100 shows the suppressed swelling of the negative electrode during repeated charge-discharge cycles, and is subjected to low reaction force. In addition, the battery 100 has a high capacity. The battery 100 can be used for various applications. Suitable applications include drive power sources to be installed in vehicles such as battery electric vehicles (BEVs), hybrid electric vehicles (HEVs), and plug-in hybrid electric vehicles (PHEVs). The battery 100 can also be used as a battery cell for small electricity storage system and the like. Typically, the battery 100 may also be used in the form of a battery pack in which multiple batteries are connected in series and/or parallel.

### [Test Examples]

Below, Test Examples related to the technology disclosed herein will be described. It is noted that the contents of Test Examples described below are not intended to limit the scope of the presently disclosed technology.

### 1. Preparation of test cells

### (Test Example 1)

First, acetylene black (AB), acrylonitrile-butadiene rubber (NBR), and poly(vinylidene fluoride) (PVDF) were mixed with N-methylpyrrolidone (NMP) at a mass ratio of AB:NBR:PVDF = 90:7:3 to obtain a protective region-forming slurry. It is noted that an NBR containing 35% or more of nitrile was used. The solid content percent of the slurry was adjusted to be 50% or less. This protective region-forming slurry was applied in a band-shaped manner on one surface of a copper foil having a thickness of 8 µm by using die coating so that the thickness after dried was 5 µm. This was then dried. In this way, a protective region was formed on the negative electrode current collector.

Subsequently, graphite as a negative electrode active material, styrene-butadiene rubber (SBR) as a binding agent, and carboxymethyl cellulose (CMC) as a thickening agent were mixed with deionized water at a mass ratio of negative electrode active material:SBR:CMC = 99:0.5:0.5 to prepare a negative electrode active material layer-forming slurry. This negative electrode active material layer-forming slurry was applied in a band-shaped manner on the surface where the protective region had been formed, which was dried and then pressed to produce a negative electrode sheet. The weight per unit area of the negative electrode active material layer was 10 mg/cm².

LiNi_{1/3}Co_{1/3}Mn_{1/3}O₂ (LNCM) was used as a positive electrode active material, AB as an electrically conductive material, and PVDF as a binder were mixed with NMP at a mass ratio of LNCM:AB:PVDF = 92:5:3 to prepare a positive electrode slurry. This slurry was applied in a band-shaped manner on the both surfaces of an aluminum foil having a thickness of 15 µm, which was dried, and then pressed to produce a positive electrode sheet.

A separator sheet was prepared in which an HRL (having a thickness of 4 µm) was provided on a porous polyolefin sheet (having a thickness of 20 µm) having a three-layer structure of PP/PE/PP. Then, the both surfaces of a single positive electrode sheet produced as described above was sandwiched by negative electrode sheets via the two of the separator sheets prepared as described above to produce an electrode body. At this time, the HRLs of the separators were positioned so as to face the positive electrode sheet.

A mixed solvent including ethylene carbonate (EC), dimethyl carbonate (DMC), and ethyl methyl carbonate (EMC) in a volume ratio of 30:30:40 was prepared. Lithium bis(oxalate)borate was dissolved in this mixed solvent to give a concentration of 1.0 mass%, and LiPF₆ as an electrolyte salt was dissolved to give a concentration of 1.0 mol/L. In this way, a non-aqueous electrolyte was obtained.

The terminals were fitted to the electrode body produced as above, which was then placed in a laminate case along with the non-aqueous electrolyte, and then sealed to obtain a test cell for Test Example 1.

### (Test Example 2)

A test cell for Test Example 2 was produced as in Test Example 1 except that NBR containing less than 35% of nitrile was used.

### (Test Example 3)

A test cell for Test Example 3 was produced as in Test Example 1 except that polyvinyl alcohol (PVA) was used instead of NBR.

### (Test Example 4)

A test cell for Test Example 4 was produced as in Test Example 1 except that the protective region was not provided on the negative electrode current collector.

### 2. Activation of test cells

The test cells for these Examples produced as described above were charged in a constant-temperature bath at 25°C. The initial charge was performed by a constant-current mode at a current value of 0.1 C up to 4.25 V. Subsequently, the cells were discharged in a constant-current mode at a current value of 0.1 C down to 2.5 V. Further, charging was performed in a constant current-constant voltage mode at a current of 0.1 C up to 4.25V. Constant-voltage charging was then performed to the point when the value of charging current at constant-voltage charging reached 1/50 C, at which point the battery was considered fully charged. Subsequently, an aging treatment was performed at 60°C for 12 hours. The cells were then discharged in a constant-current mode at a current value of 0.1 C down to 2.5 V. In this way, the test cells for these Examples were activated.

### 3. Recovery of negative electrode material

The test cells for these Examples prepared as described above were discharged at a current value of 0.1 C down to 1.0 V, and then allowed to stand for one day. Subsequently, the test cells for these Examples were disassembled, and the negative electrodes were removed, and washed with water to peel off the negative electrode active material layers. The liquid used for washing, which contained graphite from the negative electrode active material layer, was filtered to recover graphite. The recovered material was dried at a temperature of 100°C or higher to obtain a graphite powder.

### 4. Evaluation of negative electrode material

The residual content of Cu in the recovered graphite powder was quantified by performing ICP (Inductively Coupled Plasma) emission analysis. An analytical instrument PS3520 UV-DII manufactured by Hitachi High-Tech Science Corporation was used. Analysis was performed according to the instruction of the analytical instrument. The results are shown in the corresponding places of Table 1. It is noted that in these tests, the amount of copper in the negative electrode material is considered as suitably reduced if the amount of copper in the recovered graphite powder is less than 600 ppm (preferably 500 ppm or less).

### [Table 1]

**Table 1**

| | Presence of Protective region | Nitrile content in NBR | Amount of Cu in graphite powder after recovery |
|---|---|---|---|
| Test Example 1 | Yes (○) | High | 80 ppm |
| Test Example 2 | Yes (○) | Low | 200 ppm |
| Test Example 3 | Yes (○) | - | 400 ppm |
| Test Example 4 | No (×) | - | 600 ppm |

As shown in Table 1, it was observed that the test cells for Test Examples 1 to 3, in which the protective region was provided on the negative electrode current collector, had a lower content of Cu in the graphite powder as compared to the test cell for Test Example 4, in which the protective region was not provided on the negative electrode current collector.

As shown in Table 1, it was also observed that Test Example 1 having a high content of nitrile led to a lower content of Cu in the graphite powder as compared to Test Example 2 having a low content of nitrile. As described above, the technology disclosed herein enables the recovery of an easily recyclable negative electrode material having a reduced content of Cu.

The embodiments of the technology disclosed herein are described above. However, the foregoing descriptions are merely illustrative and shall not limit the scope of the claims. The technology described in the claims encompasses various modifications and alterations of the specific examples illustrated in the foregoing descriptions.

For example, in the above embodiments, the battery 100 comprises a wound electrode body as the electrode body 20, but the configuration is not limited to this. In other embodiments, the electrode body 20 may comprise a laminated electrode body in which a plurality of positive electrodes and a plurality of negative electrodes are alternately laminated.

For example, in the above embodiments, the battery 100 has a flattened rectangular shape, but the configuration is not limited to this. In other embodiments, the battery 100 may be a cylindrical battery or a laminate case-type battery.

For example, in the above embodiments, the battery 100 comprises a liquid electrolyte as the electrolyte, but the configuration is not limited to this. In other embodiments, the battery 100 may comprise a gel-like electrolyte or a solid electrolyte instead of an electrolyte liquid.

For example, in the above embodiments, the battery 100 is a lithium-ion secondary battery, but the configuration is not limited to this. In other embodiments, the battery 100 may be a nickel-metal hydride battery or a sodium-ion secondary battery.

For example, in the above embodiments, the protective region 70 includes an electrically conductive material, but the configuration is not limited to this. In other embodiments, the protective region 70 may include no electrically conductive material.

For example, in the above embodiments, the protective region 70 includes a water-insoluble binder, but the configuration is not limited to this. In other embodiments, the protective region 70 may include no water-insoluble binder.

For example, in the above embodiments, the protective region 70 is disposed directly on the negative electrode current collector 62, but the configuration is not limited to this. In other embodiments, another layer may be disposed between the negative electrode current collector 62 and the protective region 70 as long as the effects of the technology disclosed herein are not impaired.

For example, in the above embodiments, the negative electrode active material layer 64 is disposed directly on the protective region 70, but the configuration is not limited to this. In other embodiments, another layer may be disposed between the protective region 70 and the negative electrode active material layer 64 as long as the effects of the technology disclosed herein are not impaired,

As described above, the specific embodiments of the technology disclosed herein include those described in the following items.

### Item 1

An electrical energy storage device comprising a negative electrode, the negative electrode including:
a negative electrode current collector including copper,
a protective region including a resin having nitrile groups and/or hydroxyl groups, and disposed on the negative electrode current collector, and
a negative electrode active material layer disposed on the protective region.

### Item 2

The electrical energy storage device according to Item 1, wherein the resin includes at least one selected from the group consisting of acrylonitrile-butadiene rubber, acrylonitrile-styrene-butadiene rubber, and polyvinyl alcohol.

### Item 3

The electrical energy storage device according to Item 1 or 2, wherein the protective region further includes an electrically conductive material.

### Item 4

The electrical energy storage device according to Item 3, wherein the electrically conductive material includes acetylene black.

### Item 5

The electrical energy storage device according to any one of Items 1 to 4, wherein the protective region further includes a water-insoluble binder.

### Item 6

The electrical energy storage device according to Item 5, wherein the binder includes poly(vinylidene fluoride).

### Item 7

The electrical energy storage device according to any one of Items 1 to 6, wherein the protective region is disposed in a layered manner on the negative electrode current collector.

### Item 8

The electrical energy storage device according to any one of Items 1 to 7, wherein the protective region is disposed entirely on a predetermined region of the negative electrode current collector.

### Item 9

A method of manufacturing an electrical energy storage device, the method comprising:
a preparation step of preparing an electrical energy storage device assembly comprising a negative electrode, the negative electrode including:
   a negative electrode current collector including copper,
   a protective region including a resin having nitrile groups and/or hydroxyl groups, and disposed on the negative electrode current collector, and
   a negative electrode active material layer disposed on the protective region, and
a charging step of charging the electrical energy storage device assembly.

### Item 10

The method of manufacturing an electrical energy storage device according to Item 9, wherein the resin includes at least one selected from the group consisting of acrylonitrile-butadiene rubber, acrylonitrile-styrene-butadiene rubber, and polyvinyl alcohol.

### Item 11

The method of manufacturing an electrical energy storage device according to Item 9 or 10, wherein the protective region further includes an electrically conductive material.

### Item 12

The method of manufacturing an electrical energy storage device according to Item 11, wherein the electrically conductive material includes acetylene black.

### Item 13

The method of manufacturing an electrical energy storage device according to any one of Items 9 to 12, wherein the protective region includes a water-insoluble binder.

### Item 14

The method of manufacturing an electrical energy storage device according to Item 13, wherein the binder includes poly(vinylidene fluoride).

### Item 15

The method of manufacturing an electrical energy storage device according to any one of Items 9 to 14, wherein the protective region is disposed in a layered manner on the negative electrode current collector.

### Item 16

The method of manufacturing an electrical energy storage device according to any one of Items 9 to 15, wherein the protective region is disposed entirely on a predetermined region of the negative electrode current collector.

## Claims

1. An electrical energy storage device (100) comprising a negative electrode (60), the negative electrode (60) including:
a negative electrode current collector (62) including copper,
a protective region (70) including a resin having nitrile groups and/or hydroxyl groups, and disposed on the negative electrode current collector (62), and
a negative electrode active material layer (64) disposed on the protective region (70).

2. The electrical energy storage device (100) according to claim 1, wherein the resin includes at least one selected from the group consisting of acrylonitrile-butadiene rubber, acrylonitrile-styrene-butadiene rubber, and polyvinyl alcohol.

3. The electrical energy storage device (100) according to claim 1 or 2, wherein the protective region (70) further includes an electrically conductive material.

4. The electrical energy storage device (100) according to claim 3, wherein the electrically conductive material includes acetylene black.

5. The electrical energy storage device (100) according to any one of claims 1 to 4, wherein the protective region (70) further includes a water-insoluble binder.

6. The electrical energy storage device (100) according to claim 5, wherein the binder includes poly(vinylidene fluoride).

7. The electrical energy storage device (100) according to any one of claims 1 to 6, wherein the protective region (70) is disposed in a layered manner on the negative electrode current collector (62).

8. The electrical energy storage device (100) according to any one of claims 1 to 7, wherein the protective region (70) is disposed entirely on a predetermined region of the negative electrode current collector (62).

9. A method of manufacturing an electrical energy storage device (100), the method comprising:
a preparation step of preparing an electrical energy storage device assembly comprising a negative electrode (60), the negative electrode (60) including:
a negative electrode current collector (62) including copper,
a protective region (70) including a resin having nitrile groups and/or hydroxyl groups, and disposed on the negative electrode current collector (62), and
a negative electrode active material layer (64) disposed on the protective region (70), and
a charging step of charging the electrical energy storage device assembly.

10. The method of manufacturing an electrical energy storage device (100) according to claim 9, wherein the resin includes at least one selected from the group consisting of acrylonitrile-butadiene rubber, acrylonitrile-styrene-butadiene rubber, and polyvinyl alcohol.

11. The method of manufacturing an electrical energy storage device (100) according to claim 9 or 10, wherein the protective region (70) further includes an electrically conductive material.

12. The method of manufacturing an electrical energy storage device (100) according to claim 11, wherein the electrically conductive material includes acetylene black.

13. The method of manufacturing an electrical energy storage device (100) according to any one of claims 9 to 12, wherein the protective region (70) includes a water-insoluble binder.

14. The method of manufacturing an electrical energy storage device (100) according to claim 13, wherein the binder includes poly(vinylidene fluoride).

15. The method of manufacturing an electrical energy storage device (100) according to any one of claims 9 to 14, wherein the protective region (70) is disposed in a layered manner on the negative electrode current collector (62).
